(19) Europäisches Patentamt / European Patent Office / Office européen des brevets

(11) **EP 4 538 301 A1**

(12) **EUROPEAN PATENT APPLICATION**
published in accordance with Art. 153(4) EPC

(43) Date of publication:
**16.04.2025 Bulletin 2025/16**

(21) Application number: **23819657.0**

(22) Date of filing: **24.05.2023**

(51) International Patent Classification (IPC):
*C08F 8/12* (2006.01)     *C08F 218/04* (2006.01)
*C09K 8/44* (2006.01)     *C04B 24/26* (2006.01)

(52) Cooperative Patent Classification (CPC):
**C04B 24/26; C08F 8/12; C08F 218/04; C09K 8/44**

(86) International application number:
**PCT/JP2023/019390**

(87) International publication number:
**WO 2023/238674 (14.12.2023 Gazette 2023/50)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **08.06.2022 JP 2022093127**

(71) Applicant: **Denka Company Limited**
**Tokyo 103-8338 (JP)**

(72) Inventor: **YAMASHITA,Akihiro**
**Tokyo 103-8338 (JP)**

(74) Representative: **Müller-Boré & Partner**
**Patentanwälte PartG mbB**
**Friedenheimer Brücke 21**
**80639 München (DE)**

(54) **POLYVINYL ALCOHOL-BASED POLYMER**

(57)     A polyvinyl alcohol-based polymer obtained by saponification of a copolymer of a vinyl ester monomer and a trifunctional monomer, wherein an average degree of polymerization of the polyvinyl alcohol-based polymer as measured by a method described in JIS K 6726:1994 is 3000 to 6000, and wherein an average reaction number of unsaturated sites of the trifunctional monomer is in a range of 1.7 to 2.3.

**Description**

**FIELD OF THE INVENTION**

The present invention relates to a polyvinyl alcohol-based polymer, use thereof, and manufacturing method thereof.

**BACKGROUND OF THE INVENTION**

Polymers having a polyvinyl alcohol (PVA) skeleton (hereinafter collectively referred to as "polyvinyl alcohol-based polymer", or "vinyl alcohol-based polymer", or simply referred to as "PVA") are known as hydrophilic synthetic resins, and various uses taking advantage of their properties have been developed.
As an example of such uses, there is an additive for oil-well cement used for cementing oil wells, gas wells, steam wells for geothermal power generation, or the like. The oil-well cement is filled in the gap between a steel pipe and a winze so as to fix and protect the steel pipe (casing) in the form of slurry in which the oil-well cement is mixed with water and other additives. Therefore, the cement slurry preferably has high fluidity for easy filling. A phenomenon in which water contained in the cement slurry is lost due to high pressure and underground heat during injection is generally referred to as fluid loss. Fluid loss deteriorates the fluidity of the cement slurry, resulting in cementing failure and curing failure after curing of the cement. Therefore, fluid-loss reducing agents are normally added to slurry of oil-well cement.
As such a fluid-loss reducing agent, it has been proposed to use a polyvinyl alcohol-based polymer as a main component and, for example, in Patent Literatures 1 and 2, a PVA used for the fluid-loss reducing agent is described.
However, in recent years, in particular shale gas winzes have been dug deeper, so that the conditions of pressure and temperature have become harsher. The above-described conventional PVA-containing fluid-loss reducing agents have not achieved the fluid-loss reducing performance required for cement slurry injected in such harsh conditions of high temperature and high pressure. Specifically, PVA fluid-loss reducing agents melt in high temperature and, furthermore, are eluted into the winze under high pressure conditions, resulting in deterioration of fluid-loss reducing effect. Therefore, melting resistance at high temperature is required for PVA fluid-loss reducing agents. Furthermore, the problem due to the fact that, even if increasing the addition amount of the conventional fluid-loss reducing agent is attempted, the increase thickens the cement slurry, leading to deterioration of fluidity and increase in cost, may not be solved as well.
To solve the above problem, Patent Literature 3 discloses an additive for oil-well cement, containing a vinyl alcohol-based polymer, wherein the vinyl alcohol-based polymer is a saponified product of a copolymer of a vinyl ester monomer and a polyfunctional monomer, and the vinyl alcohol-based polymer has a degree of saponification of 70 to 95 mol% and a viscosity+-average degree of polymerization of 1000 to 10000.
In addition, Patent Literature 4 discloses a polyvinyl alcohol-based polymer obtained by saponification of: a homopolymer composed of vinyl ester monomers; a copolymer of a vinyl ester monomer and a monofunctional monomer other than the vinyl ester monomer; a copolymer of a vinyl ester monomer and a polyfunctional monomer; or a copolymer of a vinyl ester monomer, a monofunctional monomer other than the vinyl ester monomer, and a polyfunctional monomer, wherein the polyvinyl alcohol-based polymer has a particle diameter of 50 nm or more at a cumulative frequency of 50% in particle size distribution by dynamic light-scattering measurement of a 0.4 mass% aqueous solution of the polyvinyl alcohol-based polymer at a temperature of 25°C.

**PRIOR ART**

Patent Literature
[Patent Literature 1] International Publication No. WO 2007/146348
[Patent Literature 2] Japanese Patent Laid-Open No. 2015-196733
[Patent Literature 3] International Publication No. WO 2019/163490
[Patent Literature 4] International Publication No. WO 2022/024792

**SUMMARY OF THE INVENTION**

**TECHNICAL PROBLEM**

However, with regard to the conventional polymerization reaction of a polyfunctional monomer and a vinyl ester monomer, a problem due to the fact that a crosslinked product is formed during the polymerization, and deposit insoluble in a solvent occurs in the system, has newly become known.

## SOLUTION TO PROBLEM

In order to solve the above problem, the present invention may provide the following.

A polyvinyl alcohol-based polymer obtained by saponification of a copolymer of a vinyl ester monomer and a trifunctional monomer,

wherein an average degree of polymerization of the polyvinyl alcohol-based polymer as measured by a method described in JIS K 6726:1994 is 3000 to 6000, and

wherein an average reaction number of unsaturated sites of the trifunctional monomer is 1.7 to 2.3.

In an aspect, an amount of the polymerizable unsaturated sites with respect to a total amount of a vinyl alcohol unit and a vinyl acetate unit of the polyvinyl alcohol-based polymer may be 0.05 to 0.30 mol%. In an aspect, an amount of a unit of the trifunctional monomer with respect to a total amount of the vinyl alcohol unit and the vinyl acetate unit of the polyvinyl alcohol-based polymer may be 0.05 to 0.30 mol%.

In an aspect, a viscosity of a 4% aqueous solution of the polyvinyl alcohol-based polymer may be 40 to 200 mPa.s, and a degree of saponification of the polyvinyl alcohol-based polymer may be 75 to 99 mol%.

In an aspect, a passage rate of a 1.0 mass% aqueous solution of the polyvinyl alcohol-based polymer for a filter having an opening of 45 $\mu$m may be 95 mass% or more in terms of solid content, and a passage rate of the 1.0 mass% aqueous solution of the polyvinyl alcohol-based polymer for a membrane filter having a pore size of 0.45 $\mu$m may be 5 mass% or less in terms of solid content. In an aspect, the polyvinyl alcohol-based polymer having a particle size of 75 $\mu$m or less may be 20 mass% or less, and the polyvinyl alcohol-based polymer having a particle size of 500 $\mu$m or more may be 10 mass% or less.

In an aspect, an additive for oil-well cement comprising the polyvinyl alcohol-based polymer may be provided as well. In an aspect, a method for producing a polyvinyl alcohol-based polymer may be provided as well. A plurality types of these aspects may optionally be combined, as long as the combined aspects do not contradict each other.

## ADVANTAGEOUS EFFECT OF INVENTION

The polyvinyl alcohol-based polymer of the present invention may suppress formation of deposit insoluble in a solvent in the production process, and exhibits an excellent fluid-loss reducing effect even in harsh high-temperature or high-pressure conditions.

## DETAILED DESCRIPTION OF THE INVENTION

An embodiment of the present invention will hereinafter be described. The embodiment described below shows an example of the embodiments of the present invention, and the scope of the present invention is not limited thereby. Herein, the numerical ranges include the upper limit value and the lower limit value, unless otherwise indicated. The definition of the polymer herein follows the definition of polymers defined by the Commission on Macromolecular Nomenclature, International Union of Pure and Applied Chemistry (IUPAC), that is, "polymer molecule: molecule of high relative molecular mass, the structure of which essentially comprises the multiple repetition of units derived, actually or conceptually, from molecules of low relative molecular mass".

<Chemical Structure of Polyvinyl Alcohol-based Polymer>

The polyvinyl alcohol-based polymer of the present invention is a polymer obtained by saponifying: a copolymer of a vinyl ester monomer and a trifunctional monomer; or a copolymer of a vinyl ester monomer, a monofunctional monomer other than the vinyl ester monomer, and a trifunctional monomer. The polyvinyl alcohol-based polymer of the present invention has a high-order polymer structure unlike conventional PVAs, thereby allowing for maintenance of hot swollen state. It may be confirmed that the polyvinyl alcohol-based polymer has such a high-order polymer structure from the fact that, as described later, an average degree of polymerization as measured by the method described in JIS K 6726:1994 is 3000 to 6000, and an average reaction number of unsaturated sites of the trifunctional monomer is 1.7 to 2.3.

<Raw Material Component of Polyvinyl Alcohol-based Polymer>

The above-described vinyl ester monomer may be, for example, vinyl acetate, vinyl propionate, vinyl butyrate, vinyl valerate, vinyl caprate, vinyl laurate, vinyl stearate, vinyl benzoate, or vinyl pivalate. A mixture of these monomers may be used as well. From the viewpoint of easy polymerization, vinyl acetate is preferable.

As a trifunctional monomer copolymerizable with a vinyl ester monomer, a compound having three polymerizable unsaturated bonds in the molecule thereof may be used. Examples of such a compound include the following: triallyl ether compounds such as glycerin triallyl ether, trimethylolpropane triallyl ether, and pentaerythritol triallyl ether. Compounds containing three allylamino groups such as triallylamine; compounds containing three allyl groups such as triallyl isocyanurate and triallyl phosphate; compounds having three (meth)acrylic acids such as glycerin tri(meth)acrylate, pentaerythritol tri(meth)acrylate, trimethylolpropane tri(meth)acrylate, and isocyanuric acid tri(meth)acrylate; and trifunctional aromatic monomers such as trivinylbenzene.

Examples of the monofunctional monomer (that is, monofunctional monomers other than the vinyl ester monomer) copolymerizable with a vinyl ester monomer include the following compounds: $\alpha$-olefin monomers such as ethylene and propylene; (meth)acrylic acid alkyl ester monomers such as methyl (meth)acrylate, ethyl (meth)acrylate, butyl (meth)acrylate, and 2-ethylhexyl (meth)acrylate; unsaturated amide monomers such as (meth)acrylamide and N-methylolacrylamide; unsaturated carboxylic acid monomers such as (meth) acrylic acid, crotonic acid, maleic acid, itaconic acid, and fumaric acid; alkyl (such as methyl, ethyl and propyl) ester monomers of unsaturated carboxylic acids; anhydrides of unsaturated carboxylic acids such as maleic anhydride; a sodium salt, a potassium salt, and an ammonium salt of unsaturated carboxylic acids; sulfonic acid group-containing monomers such as 2-acrylamido-2-methylpropanesulfonic acid or salts thereof; and alkyl vinyl ether monomers.

From the viewpoint of reactivity with the vinyl ester monomer and decomposition resistance in saponification reaction, a monomer copolymerizable with the vinyl ester monomer is preferably a compound having a carbonyl group or an amide group in the molecule thereof, and furthermore preferably a compound that is resistant to decomposition by alkalis. A preferable embodiment has an effect that a copolymer of the vinyl ester monomer and the trifunctional monomer is saponified to obtain a PVA, forming a crosslinked structure from the three functional groups thereof, whereby melting resistance at high temperature may be obtained. Such a trifunctional monomer is preferably a compound having a ring structure, more preferably a compound having a heterocyclic structure, and particularly preferably triallyl isocyanurate (TAIC).

<Average Degree of Polymerization>

An average degree of polymerization of the polyvinyl alcohol-based polymer as measured by the method described in JIS K 6726:1994 "3.7 Average Degree of Polymerization" may be 3000 to 6000, preferably 3000 to 5500, and more preferably 3000 to 5000.

<Method of Calculating Average Reaction Number>

The average reaction number of the unsaturated sites of the trifunctional monomer in the polyvinyl alcohol-based polymer may be in the range of 1.7 to 2.3, preferably in the range of 1.7 to 2.2, and more preferably in the range of 1.7 to 2.1. The average reaction number may be calculated by using $^1$H-NMR or $^{13}$C-NMR in heavy water or dimethyl sulfoxide heavy solvent. For example, where NMR is used, a modified comonomer amount and a remaining amount of unsaturated sites may be calculated in the following steps, and the average reaction number may be derived therefrom.

<Copolymerization amount>

When the vinyl ester monomer and a monomer other than the vinyl ester monomer are copolymerized, the copolymerization amount is as follows: With respect to 100 mol% of structural units derived from the vinyl alcohol unit in the vinyl alcohol-based polymer, the amount of structural units derived from the monomer other than the vinyl ester monomer may preferably be 0.001 to 1.0 mol%, more preferably 0.005 to 0.5 mol%, and further preferably 0.01 to 0.2 mol%. If the copolymerization amount is adjusted to such ranges, melting resistance at high temperature improves and the vinyl alcohol-based polymer is not excessively crosslinked, which is preferable from the viewpoint of production as well.

The amount of polymerizable unsaturated sites with respect to the total amount of vinyl alcohol units and vinyl acetate units of the polyvinyl alcohol-based polymer may preferably be 0.05 to 0.30 mol%, and more preferably 0.10 to 0.30 mol%. The amount of trifunctional monomer units with respect to the total amount of vinyl alcohol units and vinyl acetate units of the polyvinyl alcohol-based polymer may preferably be 0.05 to 0.30 mol%, and more preferably 0.10 to 0.30 mol%.

<Modified Comonomer Amount>

The copolymerization amount (modified comonomer amount) of the trifunctional monomers in the PVA may be calculated by using $^1$H-NMR, $^{13}$C-NMR, or a trace total nitrogen analyzer in heavy water or dimethyl sulfoxide heavy solvent. For example, where a trace total nitrogen analyzer "TN-2100H" (manufactured by Nittoseiko Analytech Co., Ltd.) is used, the modified comonomer amount may be calculated in the following steps.

A sample of the vinyl alcohol-based polymer is put on a quartz boat, and the boat is set on an automatic boat controller ABC-210 (manufactured by Nittoseiko Analytech Co., Ltd.) to be automatically inserted into an electric furnace, and the boat is combusted in argon/oxygen gas stream. The NO gas generated in the combustion is measured by a chemiluminescence detector. A calibration curve is prepared in advance with a standard solution (N-pyridine/toluene), and the nitrogen concentration is calculated from the calibration curve.

Example of Measurement Conditions

Reaction tube: double tube for ABC

Electric furnace temperature

Inlet Temp: 800°C, Outlet Temp: 900°C

Gas flow rate: Ar: 300 mL/min, $O_2$: 300 mL/min, Ozone: 300 mL/min

Sample amount: approximately 9 to 15 mg

<Calculation of Remaining Amount of Unsaturated Sites>

The polyvinyl alcohol-based polymer is dissolved in heavy water, and the $^1$H-NMR spectrum is obtained by using an NMR spectrometer (manufactured by JEOL Ltd., ECX-400) under the condition of the measurement temperature of 80°C and the integrated number of times of 1024 to identify the structure.
The amount of unsaturated sites (mol%) in the polyvinyl alcohol-based polymer may be calculated from the integrated value of the peak derived from unsaturation, based on the integrated value of the peak of the methylene group of the main chain derived from the vinyl alcohol unit and the methylene group of the main chain derived from the vinyl acetate unit (1.8 to 2.5 ppm) of the polyvinyl alcohol-based polymer. Specifically, in the $^1$H-NMR spectrum, when the integrated value of the methylene group of the main chain derived from the vinyl alcohol unit and the methylene group of the main chain derived from the vinyl acetate unit is defined as b, and the integrated value derived from the unsaturated bonds derived from the trifunctional monomer including three unsaturated bonds is defined as a (for example, for triallyl isocyanurate, the peak near 6.3 ppm derived from -CH= of the allyl group), considering the number of protons on the carbon (2 for a methylene group, and 1 for the proton derived from an allyl group), the remaining amount of unsaturated sites X (mol%) may be calculated as:

$$X = \{a/(b/2+a)\}*100.$$

<Calculation of Average Reaction Number of Unsaturated Sites of Trifunctional Monomer>

The average reaction number of the unsaturated sites of the trifunctional monomer may be calculated from the amount of the modified comonomer of the vinyl alcohol-based polymer and the remaining amount of the unsaturated sites. Specifically, the average reaction number Z of the unsaturated sites may be calculated as:

Z = -{2/(modified comonomer amount*2)}*(remaining amount of unsaturated sites)+3.

<Degree of Saponification>

Herein, the degree of saponification of the PVA may be measured by the method described in Japanese Industrial Standards JIS K 6726:1994 "3.5 Degree of Saponification". The degree of saponification of the polyvinyl alcohol-based polymer is preferably 75 to 99 mol%, more preferably 77 to 97 mol%, and further preferably 79 to 95 mol%.

<Particle Size Distribution>

The particle size distribution of the PVA particles may be quantified by subjecting a 0.4 mass% aqueous solution (diluted aqueous solution) of the PVA to dynamic light-scattering measurement at a temperature of 25°C. The PVA particle diameter at a cumulative frequency of 50% in particle size distribution is preferably 50 nm or more, and more preferably in the range of 70 to 1000 nm. The cumulative frequency may be determined from the scattering intensity distribution frequency obtained in the dynamic light-scattering measurement.

The average particle diameter of the PVA in the diluted aqueous solution may be set in accordance with the use and, for example, the diameter is preferably 60 to 2000 nm, and more preferably 70 to 1500 nm. Herein, the average particle diameter of the PVA in the diluted aqueous solution may be determined by subjecting the particle diameter distribution obtained by subjecting the 0.4 mass% aqueous solution of the PVA to dynamic light-scattering measurement at a temperature of 25°C to cumulant analysis.

Where the PVA is used as an additive for oil-well cement, if the PVA average particle diameter in the diluted aqueous solution is 60 nm or more, the PVA in the cement slurry is less likely to be flown out, which is preferable because the fluid-loss reducing performance improves. The PVA having an average particle diameter of 2000 nm or less in the diluted aqueous solution is preferable from the viewpoint of productivity.

The PVA particles preferably do not include too large gel particles from the viewpoint of the strength of the cement after curing and PVA production. More specifically, the passage rate for a 300-mesh (opening: 0.045 mm) filter of the 1.0 mass% PVA aqueous solution may, in terms of solid content, preferably be 95 mass% or more, and more preferably in the range of 97 to 100 mass%.

Here, the passage rate for the 300-mesh filter may be calculated in the following steps. A dried PVA is dissolved in water at 25°C to obtain an aqueous solution of a concentration of 1.0 mass%. 100 mL of the obtained PVA aqueous solution is filtered with a 300-mesh (opening: 0.045 mm) filter and the mass of the PVA remaining on the filter is measured. The percentage of the PVA that passed through the filter is calculated from the mass of the measured PVA residue.

With regard to the PVA particles, the particle size distribution is preferably such that the PVA particle is less likely to pass through a membrane filter having a pore size of 0.45 $\mu$m from the viewpoint of melting resistance. More specifically, the passage rate of a 1.0 mass% aqueous solution of the PVA for a membrane filter having a pore size of 0.45 $\mu$m may preferably be 10 mass% or less, and more preferably in the range of 0 to 5 mass%, in terms of solid content.

Here, the passage rate for a 0.45 $\mu$m membrane filter may be calculated in the following steps. A PVA aqueous solution adjusted to a concentration of 1.0 mass% is filtered under a reduced pressure (10 mmHg) for 10 minutes by using a 0.45 $\mu$m filter (manufactured by ADVANTEC Group, Material: Mixed Cellulose ester, pore size: 0.45$\mu$m, and diameter: 47 mm). The passage rate is calculated from the solid content in the filtrate.

The polyvinyl alcohol-based polymer having the particle size of 75 $\mu$m or less (passable through a 75 $\mu$m sieve) may preferably be 20 mass% or less, and more preferably 18 mass% or less. Also, the polyvinyl alcohol-based polymer having the particle size of 500 $\mu$m or more (not passable through a 500$\mu$m sieve) may preferably be 10 mass% or less, and more preferably 5 mass% or less. In a more preferable embodiment, the polyvinyl alcohol-based polymer having the particle size of 75 $\mu$m or less may be 20 mass% or less and the polyvinyl alcohol-based polymer having the particle size of 500 $\mu$m or more may be 10 mass% or less.

<Viscosity>

Herein, the viscosity of the polyvinyl alcohol-based polymer may be measured by the method described in JIS K 6726:1994 "4.2 Measurement of Viscosity". The viscosity is preferably in the range of 40 to 200 mPa.s, and more preferably in the range of 50 to 160 mPa.s, from the viewpoint of improvement of productivity.

<Production Method>

In the embodiment of the present invention, with regard to polymerization of the vinyl ester monomer or the copolymer thereof, a method in which polymerization is performed in two separate steps may be used as described below. By performing polymerization in two separate steps in this manner, an effect that insoluble deposit is less likely to remain in the system is obtained. That is, first, an initiator is added to a mixture of the vinyl ester monomer and a trifunctional monomer to perform a first polymerization reaction until the polymerization percentage reaches a first polymerization percentage in the organic solvent. The first polymerization percentage may be, for example, in the range of 5 to 60%, and preferably is in the range of 10 to 55%.

After the first polymerization reaction is finished, an organic solvent (the organic solvent may be the same as the organic solvent used in the first polymerization reaction, or may be another organic solvent) is additionally added, and the second polymerization reaction is performed until the polymerization percentage reaches a second polymerization percentage. The value of the second polymerization percentage is higher than the value of the first polymerization percentage and, for example, the second polymerization percentage may be in the range of 10 to 65%, and is preferably in the range of 15 to 60%. As the organic solvent, alcohol may preferably be used. As the alcohol, for example, methanol, ethanol, or butanol may be used, and preferably methanol may be used. The concentration of the polymer in the solution of the organic solvent may arbitrarily be set and, for example, the concentration may be 10 mass% or more and 80 mass% or less.

After the second polymerization reaction is finished, the unreacted vinyl ester monomer is discharged out of the polymerization system, and the obtained solution of a polymer (such as polyvinyl ester) is saponified in any method, whereby a PVA may be prepared. Examples of the saponification method include a method in which an alkali catalyst is added to the alcohol solution of the polymer. An example of the saponification steps is described below.

As an alcohol which is the solvent for the polymer, for example, methanol, ethanol, or butanol may be used, and preferably methanol may be used. The concentration of the polymer in the alcohol solution may arbitrarily be set and, for example, the concentration may be 10 mass% or more and 80 mass% or less.

Next, an alkali catalyst is added to the solution to perform saponification reaction. Examples of the alkali catalyst include: alkali metal hydroxides such as sodium hydroxide, potassium hydroxide, sodium methylate, sodium ethylate, and potassium methylate; and alcoholate. Among these, sodium hydroxide is preferably used. The addition amount of the alkali catalyst is not particularly limited, but the amount is preferably 1.0 to 100.0 millimole equivalents, and more preferably 5.0 to 30.0 millimole equivalents, with respect to the amount of the polymer. The reaction temperature during saponification is not particularly limited, but the temperature is preferably 10 to 70°C, and more preferably 30 to 55°C. The reaction time is not particularly limited as well and the time may be, for example, 20 minutes or more to 2 hours.

The degree of saponification may appropriately be adjusted in accordance with the use of the PVA and, for example, the degree of saponification may be 72 to 99 mol%, and preferably 75 to 99 mol%. After saponification reaction, a washing step and a drying step may be performed as necessary to remove impurities such as sodium acetate.

<Additive for Oil-Well Cement>

In an embodiment, an additive for oil-well cement comprising the above-described PVA may be provided, and the additive may suitably be used for cementing of oil wells, gas wells, steam wells for geothermal power generation, or the like.

Cementing performed during digging of a winze is an operation in which cement is injected into the gap between the dug winze and a steel pipe inserted thereinto. As a cementing method, a method in which cement and various additives such as a fluid-loss additive are mixed in a dried state, and then the mixture is injected using a pump while slurrying the mixture with high-pressure water is widely adopted.

Using the PVA as the fluid-loss reducing agent reduces loss of water contained in cement slurry during cementing (that is, fluid loss is reduced), which allows for maintenance of fluidity of the cement slurry. If the fluid loss is large, the fluidity of the cement slurry is lost, thereby making it difficult to perform sufficient cementing.

Evaluation of fluid loss is one of the evaluation points of oil-well cement defined by American Petroleum Institute (API). A method of testing fluid loss is described in Recommended Practice for Testing Well Cements, API Recommended Practice 10B-2, April 2013.

<Oil-Well Cement Composition>

In an embodiment, an oil-well cement composition comprising oil-well cement and an additive for the oil-well cement may be provided. The oil-well cement is not particularly limited, as long as the cement is cement used for cementing of oil wells, gas wells, steam wells for geothermal power generation, or the like.

With regard to the composition, the content of the additive for oil-well cement may preferably be 0.01 to 10% bwoc, and more preferably 0.05 to 5% bwoc. If the content is within such ranges, fluid loss is effectively reduced. The unit "bwoc" (by weight of cement) refers to cement weight basis, and refers to the weight of the additive in a dried state to be added to the cement composition based only on the solid content of the cement.

<Oil-Well Cement Slurry>

In an embodiment, an oil-well cement slurry comprising the oil-well cement, the additive for the oil-well cement, and water may be provided as well. With regard to the cement slurry, the water content is preferably 20 to 40 mass%.

The method for incorporating the additive for oil-well cement into the cement slurry is not particularly limited. Examples of the method include a method in which a composition comprising the oil-well cement and the additive is prepared, and then the composition and water are mixed, and a method in which the oil-well cement, the additive, and water are mixed without preparing the composition.

**EXAMPLES**

The present invention will hereinafter be described in more detail based on Examples. Examples described below show some of representative Examples of the present invention, and the scope of the present invention is not limited thereby.

<Preparation of PVA>

Example 1

100 parts by mass of vinyl acetate, 70.2 parts by mass of methanol (described as "initial methanol" in Table), 0.16 parts by mass of triallyl isocyanurate (TAIC) as a trifunctional monomer, and $5.0 \times 10^{-6}$ parts by mass of PEROYL NPP (manufactured by Nippon Oil & Fats Co., Ltd.) as an initiator were fed into a polymerization can equipped with a reflux condenser, a dropping funnel, and a stirrer, and polymerization was performed at a boiling point while stirring the fed materials under a nitrogen atmosphere. When the polymerization percentage reached 30%, 26.1 parts by mass of methanol (described as "later-added methanol" in Table) was added to perform polymerization until the polymerization percentage reached 44%. Next, unreacted vinyl acetate monomer was removed from the polymerization system to obtain a methanol solution of polyvinyl acetate-TAIC copolymer.

A methanol solution of sodium hydroxide was added to the obtained methanol solution of vinyl acetate-TAIC copolymer (0.008 mol% of sodium hydroxide with respect to the amount of the copolymer). Then, saponification reaction was performed at 45°C for 45 minutes to obtain a PVA having a degree of saponification of 91.3 mol%.

In addition, it was visually confirmed if insoluble deposit did not remain in the system during the experiment. The case in which deposit was not visually confirmed was evaluated as "good." The case in which a little deposit was visually confirmed was evaluated as "poor." The case in which a lot of deposit was visually confirmed was evaluated as "bad".

Examples 2 to 6 and Comparative Examples 1 to 4

PVAs of Examples 2 to 6 and Comparative Examples 1 to 4 were obtained in the same steps as in Example 1 except that the fed amounts were changed as shown in Table 1 below. Comparative Examples 2 and 3 are examples that have reconstructed Examples 3 and 5 respectively in Patent Literature 3. Comparative Example 4 is an example that has reconstructed Example 5 in Patent Literature 4. That is, in Comparative Examples, methanol was not added in separate steps.

<Measurement of Physical Properties of PVA>

Copolymerization Amount and Amount of Unsaturated Sites

In accordance with the above method, calculation was performed by using a trace total nitrogen analyzer "TN-2100H" (manufactured by Nittoseiko Analytech Co., Ltd.).

Degree of Saponification

Measurement and calculation were performed in accordance with the method described in Japanese Industrial Standards JIS K 6726:1994 "3.5 Degree of Saponification".

Average Degree of Polymerization

Measurement and calculation were performed in accordance with Japanese Industrial Standards JIS K 6726:1994 "3.7 Average Degree of Polymerization". Before injecting the PVA aqueous solution adjusted to around 1 mass% for measurement of the average degree of polymerization into an Ostwald meter, filtration was performed with a 300-mesh (opening: 0.045 mm) filter. As the concentration of the PVA used for calculating the average degree of polymerization, the value of the concentration after filtration was used.

Viscosity

An aqueous solution of the composition of each Example and Comparative Example prepared in the above manner adjusted to 4 mass% was used as a sample for measuring the viscosity. By using the sample, measurement and calculation were performed in accordance with Japanese Industrial Standards JIS K 6726:1994 "4.2 Measurement of Viscosity".

Measurement of Fluid Loss

The fluid-loss reducing effect of the PVA was measured in accordance with the fluid-loss evaluation method in American Petroleum Institute (API) standard 10B-2 (April 2013). The specific measurement steps are shown below.

Oil-well cement of class G was blended with the PVA in an amount described in Table and 0.4% bwoc of a curing retarder (CR-270, manufactured by Flotek Industries, Inc.), and water was mixed therewith in accordance with the steps described in American Petroleum Institute (API) standard 10B-2 (April 2013) to obtain cement slurry having a water content of 30 mass%. The obtained cement slurry was put into a fluid-loss evaluation tester (Model 7120, manufactured by Chandler Engineering Company LLC), and subjected to a test in accordance with the steps described in American Petroleum Institute (API) standard 10B-2 (April 2013 ed.) at the temperature described in Table under a pressure of 1000 psi, and the amount of fluid loss was calculated.

As shown in Table 2, the temperature was set in the range of 40°C to 140°C, and the addition amount of the PVA was set in the range of 0.4 to 1.2% bwoc to perform the evaluation. In Table, the sign "-" indicates that no measurement of the fluid loss was performed.

[Table 1]

[Table 1]

| | | | Example 1 | Example 2 | Example 3 | Example 4 | Example 5 | Example 6 | Comparative Example 1 | Comparative Example 2 | Comparative Example 3 | Comparative Example 4 |
|---|---|---|---|---|---|---|---|---|---|---|---|---|
| Formulation | Vinyl acetate | [parts by mass] | 100 | 100 | 100 | 100 | 100 | 100 | 100 | 100 | 100 | 100 |
| | Comonomer | Type | TAIC | TAIC | TAIC | TAIC | TAIC | TAIC | TAIC | TAIC | TAIC | TAIC |
| | | [parts by mass] | 0.16 | 0.16 | 0.16 | 0.16 | 0.16 | 0.16 | 0.036 | 0.036 | 0.036 | 0.33 |
| | Initial methanol | [parts by mass] | 70.2 | 66.7 | 66.7 | 66.7 | 66.7 | 60.0 | 10.3 | 22.1 | 22.1 | 150.0 |
| | Later-added methanol | [parts by mass] | 26.1 | 29.6 | 41.8 | 41.8 | 41.8 | 60.0 | 0 | 0 | 0 | 0 |
| | total Methanol | [parts by mass] | 96.3 | 96.3 | 108.5 | 108.5 | 108.5 | 120 | 10.3 | 22.1 | 22.1 | 150 |
| | Polymerization percentage | [%] | 44 | 51 | 55 | 55 | 55 | 60 | 43 | 50 | 50 | 69 |
| | Deposit | [-] | good | good | good | good | good | good | poor | bad | bad | poor |
| Physical properties of PVA | Copolymerization amount | [mol%] | 0.11 | 0.10 | 0.10 | 0.10 | 0.10 | 0.12 | 0.023 | 0.023 | 0.023 | 0.16 |
| | Unsaturated site amount | [mol%] | 0.14 | 0.11 | 0.11 | 0.11 | 0.11 | 0.09 | 0.04 | 0.03 | 0.03 | 0.12 |
| | Degree of Saponification | [mol%] | 91.3 | 87.9 | 88.3 | 79.2 | 88.3 | 89.1 | 88.8 | 79.7 | 87.6 | 80.1 |
| | Average degree of polymerization | [-] | 3010 | 3160 | 3460 | 3460 | 3460 | 3410 | 2790 | 2900 | 2900 | 2720 |
| | 4% Viscosity | [mPa·s] | 52 | 61 | 100 | 112 | 100 | 144 | 48.3 | 56.7 | 53.2 | 46.4 |
| | Average reaction number of unsaturated sites | [Number] | 1.7 | 1.9 | 1.9 | 1.9 | 1.9 | 2.1 | 1.3 | 1.6 | 1.6 | 2.4 |

EP 4 538 301 A1

(continued)

| | | Example 1 | Example 2 | Example 3 | Example 4 | Example 5 | Example 6 | Comparative Example 1 | Comparative Example 2 | Comparative Example 3 | Comparative Example 4 |
|---|---|---|---|---|---|---|---|---|---|---|---|
| 45 μm Passage rate | [%] | >99 | >99 | >99 | >99 | >99 | >99 | >99 | >99 | >99 | >99 |
| 0.45 μm Passage rate | [%] | <1 | <1 | <1 | <1 | <1 | <1 | 94 | 96 | 92 | 9.2 |
| 500 μm or more | [mass%] | 0.3 | 0.1 | 0.2 | 0.2 | 0.2 | 0.4 | 0.3 | 0.1 | 0.1 | 0.1 |
| 75μm or less | [mass%] | 11.1 | 14.6 | 7.5 | 9.8 | 35 | 10.5 | 10.4 | 9.8 | 9.8 | 10.8 |

[Table 2]

[Table 2]

| | Temperature [°C] | Addition amount of PVA [% bwoc] | | Example 1 | Example 2 | Example 3 | Example 4 | Example 5 | Example 6 | Comparative Example 1 | Comparative Example 2 | Comparative Example 3 | Comparative Example 4 |
|---|---|---|---|---|---|---|---|---|---|---|---|---|---|
| Fluid Loss [mL] | 40 | 0.4 | [cc] | 22 | 18 | 14 | 19 | 16 | 15 | 32 | 23 | 14 | 28 |
| | 60 | 0.6 | [cc] | 26 | 24 | 22 | 34 | 26 | 23 | 68 | 120 | 16 | 34 |
| | 80 | 0.8 | [cc] | 47 | 32 | 31 | 42 | 32 | 29 | 72 | 180 | 24 | 44 |
| | 100 | 0.5 | [cc] | 144 | 62 | 58 | 89 | 138 | 54 | 388 | 663 | 344 | 122 |
| | 100 | 0.8 | [cc] | 82 | 33 | 34 | 54 | 53 | 31 | 243 | 330 | 68 | 71 |
| | 120 | 1.2 | [cc] | 78 | 31 | 38 | 104 | 99 | 34 | 399 | 455 | 340 | 680 |
| | 140 | 1.2 | [cc] | 248 | 58 | 52 | 377 | 167 | 51 | 665 | 690 | 640 | - |

From the results of Examples, it was confirmed that the additive for oil-well cement of the present invention is excellent in the fluid-loss reducing performance, and may be produced without occurring deposit insoluble in a solvent and without excessively increasing the viscosity in the system. On the other hand, in Comparative Examples, it was confirmed as well that there was insufficiency in either performance.

(Supplement 1)

A polyvinyl alcohol-based polymer obtained by saponification of a copolymer of a vinyl ester monomer and a trifunctional monomer,

wherein an average degree of polymerization of the polyvinyl alcohol-based polymer as measured by a method described in JIS K 6726:1994 is 3000 to 6000, and

wherein an average reaction number of unsaturated sites of the trifunctional monomer is in a range of 1.7 to 2.3.

(Supplement 2)

The polyvinyl alcohol-based polymer according to Supplement 1, wherein an amount of the polymerizable unsaturated sites, with respect to a total amount of a vinyl alcohol unit and a vinyl acetate unit of the polyvinyl alcohol-based polymer, is 0.05 to 0.30 mol%.

(Supplement 3)

The polyvinyl alcohol-based polymer according to Supplement 1 or 2, wherein an amount of a unit of the trifunctional monomer, with respect to a total amount of the vinyl alcohol unit and the vinyl acetate unit of the polyvinyl alcohol-based polymer, is 0.05 to 0.30 mol%.

(Supplement 4)

The polyvinyl alcohol-based polymer according to any one of Supplements 1 to 3, wherein a viscosity of a 4% aqueous solution of the polyvinyl alcohol-based polymer is 40 to 200 mPa.s.

(Supplement 5)

The polyvinyl alcohol-based polymer according to any one of Supplements 1 to 4, wherein a degree of saponification of the polyvinyl alcohol-based polymer is 75 to 99 mol%.

(Supplement 6)

The polyvinyl alcohol-based polymer according to any one of Supplements 1 to 5, wherein a passage rate of a 1.0 mass% aqueous solution of the polyvinyl alcohol-based polymer for a filter having an opening of 45 $\mu$m is 95 mass% or more in terms of solid content; and
wherein a passage rate of the 1.0 mass% aqueous solution of the polyvinyl alcohol-based polymer for a membrane filter having a pore size of 0.45 $\mu$m is 5 mass% or less in terms of solid content.

(Supplement 7)

The polyvinyl alcohol-based polymer according to any one of Supplements 1 to 6, wherein the polyvinyl alcohol-based polymer has a particle size of 75 $\mu$m or less at 20 mass% or less and a particle size of 500 $\mu$m or more at 10 mass% or less.

(Supplement 8)

An additive for oil-well cement comprising the polyvinyl alcohol-based polymer according to any one of Supplements 1 to 7.

(Supplement 9)

A method for producing a polyvinyl alcohol-based polymer comprising the steps of:

adding an initiator to a mixture of a vinyl ester monomer and a trifunctional monomer to perform a first polymerization reaction until it reaches a first polymerization percentage in an organic solvent;

adding an organic solvent after the first polymerization reaction to perform a second polymerization reaction until it reaches a second polymerization percentage higher than the first polymerization percentage; and

adding a solution in which an alkali catalyst is added to an organic solvent to a solution of a copolymer of the vinyl ester monomer and the trifunctional monomer obtained after the second polymerization reaction to perform saponification reaction to obtain a polyvinyl alcohol-based polymer having an average degree of polymerization as measured by a method described in JIS K 6726:1994 of 3000 to 6000, and having an average reaction number of unsaturated sites of the trifunctional monomer of 1.7 to 2.3.

## Claims

1. A polyvinyl alcohol-based polymer obtained by saponification of a copolymer of a vinyl ester monomer and a trifunctional monomer,

   wherein an average degree of polymerization of the polyvinyl alcohol-based polymer as measured by a method described in JIS K 6726:1994 is 3000 to 6000, and
   wherein an average reaction number of unsaturated sites of the trifunctional monomer is in a range of 1.7 to 2.3.

2. The polyvinyl alcohol-based polymer according to claim 1, wherein an amount of the polymerizable unsaturated sites, with respect to a total amount of a vinyl alcohol unit and a vinyl acetate unit of the polyvinyl alcohol-based polymer, is 0.05 to 0.30 mol%.

3. The polyvinyl alcohol-based polymer according to claim 1 or 2, wherein an amount of a unit of the trifunctional monomer, with respect to a total amount of the vinyl alcohol unit and the vinyl acetate unit of the polyvinyl alcohol-based polymer, is 0.05 to 0.30 mol%.

4. The polyvinyl alcohol-based polymer according to claim 1 or 2, wherein a viscosity of a 4% aqueous solution of the polyvinyl alcohol-based polymer is 40 to 200 mPa.s.

5. The polyvinyl alcohol-based polymer according to claim 1 or 2, wherein a degree of saponification of the polyvinyl alcohol-based polymer is 75 to 99 mol%.

6. The polyvinyl alcohol-based polymer, according to claim 1 or 2, wherein a passage rate of a 1.0 mass% aqueous solution of the polyvinyl alcohol-based polymer for a filter having an opening of 45 $\mu$m is 95 mass% or more in terms of solid content; and
   wherein a passage rate of the 1.0 mass% aqueous solution of the polyvinyl alcohol-based polymer for a membrane filter having a pore size of 0.45 $\mu$m is 5 mass% or less in terms of solid content.

7. The polyvinyl alcohol-based polymer, according to claim 1 or 2, wherein the polyvinyl alcohol-based polymer having a particle size of 75 $\mu$m or less is 20 mass% or less; and
   wherein the polyvinyl alcohol-based polymer having a particle size of 500 $\mu$m or more is 10 mass% or less.

8. An additive for oil-well cement comprising the polyvinyl alcohol-based polymer according to claim 1 or 2.

9. A method for producing a polyvinyl alcohol-based polymer comprising the steps of:

   adding an initiator to a mixture of a vinyl ester monomer and a trifunctional monomer to perform a first polymerization reaction until the reaction reaches a first polymerization percentage in an organic solvent;
   adding an organic solvent after the first polymerization reaction to perform a second polymerization reaction until the reaction reaches a second polymerization percentage higher than the first polymerization percentage; and

adding a solution in which an alkali catalyst is added to an organic solvent to a solution of a copolymer of the vinyl ester monomer and the trifunctional monomer obtained after the second polymerization reaction to perform saponification reaction to obtain a polyvinyl alcohol-based polymer having an average degree of polymerization as measured by a method described in JIS K 6726:1994 of 3000 to 6000, and having an average reaction number of unsaturated sites of the trifunctional monomer of 1.7 to 2.3.

## INTERNATIONAL SEARCH REPORT

International application No.

**PCT/JP2023/019390**

| A. | CLASSIFICATION OF SUBJECT MATTER |

*C08F 8/12*(2006.01)i; *C08F 218/04*(2006.01)i; *C09K 8/44*(2006.01)i; *C04B 24/26*(2006.01)i
FI:   C08F8/12; C04B24/26 B; C04B24/26 C; C09K8/44; C08F218/04

According to International Patent Classification (IPC) or to both national classification and IPC

| B. | FIELDS SEARCHED |

Minimum documentation searched (classification system followed by classification symbols)

C08F6/00-246/00; 301/00; C09K8/00-8/94; C04B2/00-32/02; 40/00-40/06

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |

| Category* | Citation of document, with indication, where appropriate, of the relevant passages | Relevant to claim No. |
|---|---|---|
| X | WO 2022/024792 A1 (DENKA COMPANY LIMITED) 03 February 2022 (2022-02-03) claims 1-6, paragraphs [0010], [0018], [0023], [0045]-[0058], table 1, example 2 | 1-8 |
| A | | 9 |
| A | WO 2019/163490 A1 (DENKA COMPANY LIMITED) 29 August 2019 (2019-08-29) entire text | 1-9 |
| A | WO 2014/171502 A1 (KURARAY CO., LTD.) 23 October 2014 (2014-10-23) entire text | 1-9 |
| A | JP 03-197505 A (AIR PROD AND CHEM INC) 28 August 1991 (1991-08-28) entire text | 1-9 |
| A | JP 2019-196499 A (SYNTHOMER (UK) LIMITED) 14 November 2019 (2019-11-14) entire text | 1-9 |

☐ Further documents are listed in the continuation of Box C.    ☑ See patent family annex.

| * | Special categories of cited documents: |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **03 August 2023** | **15 August 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

# EP 4 538 301 A1

**INTERNATIONAL SEARCH REPORT**
Information on patent family members

International application No.

**PCT/JP2023/019390**

| Patent document cited in search report | | | Publication date (day/month/year) | Patent family member(s) | | | Publication date (day/month/year) |
|---|---|---|---|---|---|---|---|
| WO | 2022/024792 | A1 | 03 February 2022 | EP | 4144770 | A1 | |
| | | | | claims 1-6, paragraphs [0009], [0017], [0022], [0044]-[0056], table 1, example 2 | | | |
| | | | | CN | 115605515 | A | |
| | | | | TW | 202208592 | A | |
| WO | 2019/163490 | A1 | 29 August 2019 | JP | 2020-79197 | A | |
| | | | | US | 2020/0224076 | A1 | |
| | | | | entire text | | | |
| | | | | JP | 2021-4170 | A | |
| | | | | JP | 2022-27773 | A | |
| | | | | US | 2020/0377780 | A1 | |
| | | | | EP | 3686171 | A1 | |
| | | | | CN | 111356667 | A | |
| | | | | TW | 201942086 | A | |
| WO | 2014/171502 | A1 | 23 October 2014 | US | 2016/0083490 | A1 | |
| | | | | entire text | | | |
| | | | | US | 2018/0223023 | A1 | |
| | | | | EP | 2987810 | A1 | |
| | | | | EP | 3381954 | A1 | |
| | | | | KR | 10-2015-0144792 | A | |
| | | | | CN | 105308076 | A | |
| | | | | CN | 111333756 | A | |
| | | | | TW | 201500385 | A | |
| | | | | CN | 108047372 | A | |
| JP | 03-197505 | A | 28 August 1991 | US | 4975320 | A | |
| | | | | entire text | | | |
| | | | | EP | 381122 | A2 | |
| | | | | KR | 10-1990-0012958 | A | |
| | | | | CA | 2008617 | A1 | |
| JP | 2019-196499 | A | 14 November 2019 | JP | 2017-509782 | A | |
| | | | | US | 2017/0137542 | A1 | |
| | | | | entire text | | | |
| | | | | WO | 2015/145173 | A1 | |
| | | | | EP | 3119815 | A1 | |
| | | | | EP | 3434698 | A1 | |
| | | | | TW | 201540737 | A | |
| | | | | KR | 10-2016-0140758 | A | |
| | | | | CN | 109354641 | A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2007146348 A
- JP 2015196733 A
- WO 2019163490 A
- WO 2022024792 A

### Non-patent literature cited in the description

- *Recommended Practice for Testing Well Cements, API Recommended Practice 10B-2*, April 2013
- *American Petroleum Institute (API) standard 10B-2*, April 2013